# FASCICULE DE BREVET EUROPEEN

(11) **EP 3 919 333 B1**
(45) Date de publication et mention de la délivrance du brevet: **01.11.2023**
(21) Numéro de dépôt: 21177725.5
(22) Date de dépôt: 04.06.2021
(51) Int. Cl.: B60T 17/22, B61L 27/57

(54) **INSTALLATION DE SURVEILLANCE D'UNE PLURALITÉ DE VÉHICULES ET PROCÉDÉ DE SURVEILLANCE ASSOCIÉ**
ANLAGE ZUR ÜBERWACHUNG EINER VIELZAHL VON FAHRZEUGEN UND ENTSPRECHENDES ÜBERWACHUNGSVERFAHREN
INSTALLATION FOR MONITORING A PLURALITY OF VEHICLES AND ASSOCIATED MONITORING METHOD

(30) Priorité: 05.06.2020 FR 2005889
(43) Date de publication de la demande: 08.12.2021
(73) Titulaire: ALSTOM Holdings, 93400 Saint-Ouen-sur-Seine (FR)
(72) Inventeur: FUMAROLA, Francesco Paolo, 92100 Boulogne Billancourt (FR)
(74) Mandataire: Lavoix

(56) Documents cités:
- WO-A1-2018/015164
- DE-U1- 20 117 397
- US-A1- 2010 100 275

## Description

La présente invention concerne une installation de surveillance d'un ensemble de véhicules. La présente invention concerne également un procédé de surveillance d'un tel ensemble de véhicules.

On connait des documents DE 201 17 397 U1 et US 2010/1002275 A1, des installations de surveillance.

De nombreux véhicules, notamment les véhicules de transport en commun tels que les véhicules ferroviaires, comportent des indicateurs de l'état de leur système de freinage. Ces indicateurs comportent en général un organe mobile actionné par le système pneumatique commandant le freinage. En particulier, la position de l'organe mobile dépend de la pression dans le système pneumatique et donc de l'état du système de freinage.

Ainsi, en observant de l'extérieur du véhicule la position de l'organe mobile pendant l'application de différentes commandes au système de freinage, il est possible de déterminer si le frein est effectivement déplacé entre ses différentes positions d'une manière correspondant aux différentes commandes appliquées. Ces observations sont en général effectuées régulièrement sur les véhicules lorsqu'ils sont au dépôt, par exemple tous les matins.

Toutefois, de telles observations sont fastidieuses et requièrent une main-d'oeuvre importante. Par exemple, de nombreux véhicules sont équipés de systèmes de freinage comprenant de multiples freins, un indicateur correspondant étant prévu pour chacun des freins. Les indicateurs sont donc répartis sur toute la longueur du véhicule, et doivent être vérifiés un à un par un opérateur se déplaçant sur toute la longueur du train. En outre, un autre opérateur doit être présent dans la cabine de pilotage du véhicule pour commander le système de freinage, et rester en communication avec l'opérateur qui observe les indicateurs afin d'évaluer si les commandes sont effectivement appliquées par le système de freinage.

Des systèmes comportant des caméras permettant d'observer le mouvement des freins d'un véhicule ont été proposés par le document WO 2018015164 A1, et permettent à un unique opérateur de vérifier le bon fonctionnement des freins relativement rapidement, puisqu'il n'est pas nécessaire qu'un opérateur à l'extérieur du véhicule se déplace d'un frein à l'autre.

Toutefois, de telles installations sont difficiles à mettre en oeuvre, et notamment ne sont pas adaptées à de nombreux types de véhicules.

Il existe donc un besoin pour une installation de surveillance d'un ensemble de véhicules, qui permette d'observer simplement l'état des indicateurs de freinage des véhicules, et qui soit adaptable à de nombreux modèles de véhicules.

A cet effet, il est proposé une installation de surveillance d'une pluralité de véhicules, la pluralité de véhicules comportant au moins deux types de véhicules distincts, chaque véhicule comportant au moins un frein et un indicateur de freinage, le frein étant commutable entre une configuration de freinage dans laquelle le frein s'oppose à un déplacement du véhicule et une configuration de déplacement dans laquelle le frein ne s'oppose pas au déplacement du véhicule, l'indicateur comportant un organe de signalisation configuré pour générer au moins un premier signal et un deuxième signal, chaque premier ou deuxième signal étant un signal visuel observable depuis l'extérieur du véhicule, l'indicateur étant configuré pour que l'organe de signalisation génère le premier signal lorsque le frein est dans la configuration de déplacement et génère le deuxième signal lorsque le frein est dans la configuration de freinage, l'installation comportant un emplacement de réception d'un véhicule parmi la pluralité de véhicules dans une position de réception, au moins un imageur, un support de l'imageur et un dispositif électronique d'analyse, l'imageur étant configuré pour acquérir des images et pour transmettre au moins une image acquise au dispositif d'analyse. Le support est configuré pour déplacer l'imageur entre plusieurs positions prédéterminées, et en ce que l'installation comprend un module de commande propre à commander au support le déplacement de l'imageur en fonction du type de véhicule reçu dans l'emplacement de réception.

Selon des modes de réalisation particuliers, l'ensemble comporte une ou plusieurs des caractéristiques suivantes, prise(s) isolément ou selon toutes les combinaisons techniquement possibles :
- le support est configuré pour déplacer l'imageur entre une troisième position et une quatrième position, l'imageur étant configuré pour, lorsqu'un premier véhicule est dans la position de réception, acquérir une image de l'indicateur du premier véhicule lorsque l'imageur est dans la troisième position et étant configuré pour, lorsqu'un deuxième véhicule différent du premier véhicule, est dans la position de réception, acquérir une image de l'indicateur du deuxième véhicule lorsque l'imageur est dans la quatrième position.
- chaque véhicule s'étend, lorsque le véhicule est dans la position de réception, selon une direction longitudinale, le support étant configuré pour déplacer l'imageur selon la direction longitudinale entre les troisième et quatrième positions.
- une distance, selon la direction longitudinale, entre les troisième et quatrième positions est inférieure ou égale à 2 mètres.
- le support est configuré pour déplacer l'imageur selon une direction verticale entre les troisième et quatrième positions.
- une distance, selon la direction verticale, entre les troisième et quatrième positions est inférieure ou égale à 2 mètres.
- l'installation comporte un dispositif électronique configuré pour identifier un type de véhicule accueilli dans l'emplacement de réception et le module de commande est configuré pour commander le déplacement de l'imageur, par le support, entre les différentes positions prédéterminées en fonction du type de véhicule identifié.
- le dispositif d'analyse est configuré pour afficher chaque image acquise à destination d'un opérateur.
- le dispositif d'analyse est configuré pour détecter une configuration du frein à partir d'au moins une image reçue.

Il est également proposé un procédé de surveillance d'une pluralité de véhicules, la pluralité de véhicules comportant au moins deux types de véhicules distincts, chaque véhicule comportant au moins un frein et un indicateur de freinage, le frein étant commutable entre une configuration de freinage dans laquelle le frein s'oppose à un déplacement du véhicule et une configuration de déplacement dans laquelle le frein ne s'oppose pas à un déplacement du véhicule, l'indicateur comportant un organe de signalisation configuré pour générer un premier signal et un deuxième signal, chaque premier ou deuxième signal étant un signal visuel observable depuis l'extérieur du véhicule, l'indicateur étant configuré pour que l'organe de signalisation génère le premier signal lorsque le frein est dans la configuration de déplacement et génère le deuxième signal lorsque le frein est dans la configuration de freinage, le procédé étant mis en oeuvre par une installation comportant un emplacement de réception d'un véhicule dans une position de réception, au moins un imageur, un support de l'imageur et un dispositif électronique d'analyse, l'imageur étant configuré pour acquérir des images et pour transmettre au moins une image acquise au dispositif d'analyse, le procédé comportant une étape de commande, par un module de commande, d'un déplacement de l'imageur entre deux positions prédéterminées par le support en fonction du type du véhicule reçu dans l'emplacement de réception.

Des caractéristiques et avantages de l'invention apparaîtront à la lecture de la description qui va suivre, donnée uniquement à titre d'exemple non limitatif, et faite en référence aux dessins annexés, sur lesquels :
[Fig 1] la figure 1 est une représentation schématique d'un véhicule et d'une installation selon l'invention, et
[Fig 2] la figure 2 est un ordinogramme des étapes d'un procédé de surveillance mis en oeuvre par l'installation de la figure 1.

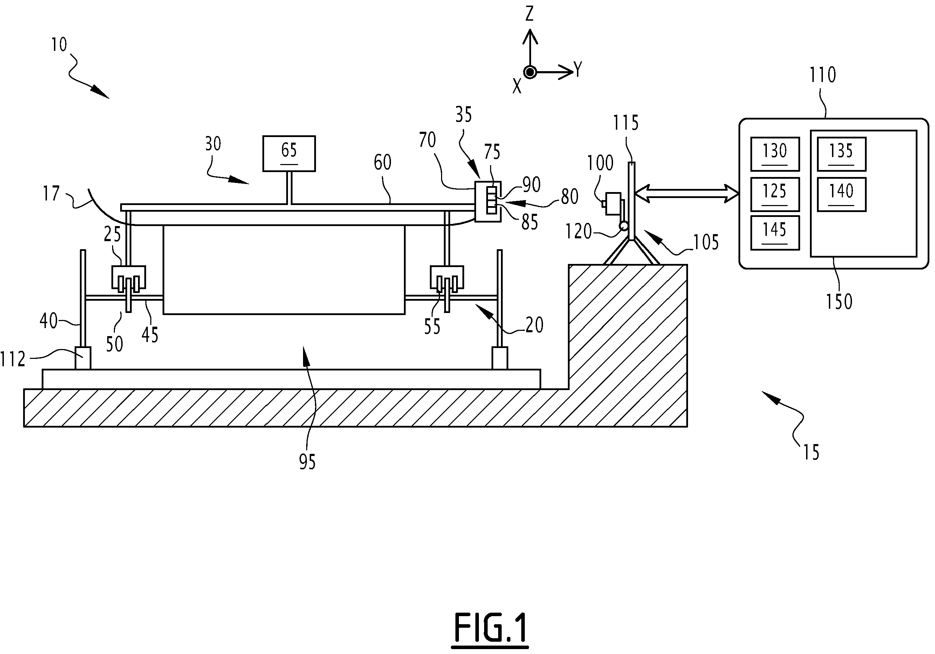

Un véhicule 10 et un premier exemple d'installation 15 selon l'invention est représenté sur la figure 1.

Le véhicule 10 fait partie d'une pluralité de véhicules 10 que l'installation 15 est configurée pour surveiller.

La pluralité de véhicules 10 comporte, par exemple, au moins deux sous-ensembles de véhicules 10. Chaque sous-ensemble est, par exemple, constitué par un ou une pluralité de véhicule(s) 10 d'un même type, ce type de véhicules 10 étant distinct du type de véhicules 10 associé à chaque autre sous-ensemble.

Chaque sous-ensemble de véhicules 10 est, par exemple, associé à un identifiant apte à identifier le sous-ensemble de manière unique parmi la pluralité de sous-ensembles. En variante, chaque véhicule 10 est associé à un identifiant apte à identifier le véhicule 10 de manière unique parmi la pluralité de véhicules 10.

Chaque identifiant est, par exemple, inscrit à un emplacement du véhicule 10, notamment sous forme d'un code matriciel ou encore d'une suite de chiffres et/ou de lettres.

Chaque véhicule 10 est, par exemple, un véhicule de transport en commun tel qu'un véhicule ferroviaire, notamment une voiture ferroviaire, ou encore un train comportant une pluralité de telles voitures reliées les unes aux autres. En variante, le véhicule 10 est un véhicule non ferroviaire tel qu'un bus, une voiture ou encore un camion.

Chaque véhicule 10 comporte une carrosserie 17, au moins un essieu 20, au moins un frein 25, un système de commande 30 de chaque frein 25, et au moins un indicateur de freinage 35.

En particulier, chaque véhicule 10 comporte une pluralité d'essieux 20, au moins un frein 25 par essieu 20 et au moins un indicateur de freinage 35 par essieu 20, notamment un indicateur de freinage 35 par frein 25.

Chaque véhicule 10 s'étend selon une direction longitudinale X. La direction longitudinale X est notamment la direction selon laquelle le véhicule 10 est configuré pour se déplacer en ligne droite.

Il est défini, pour chaque véhicule 10, une direction transversale Y et une direction verticale Z.

La direction transversale Y est une direction perpendiculaire à la direction verticale Z et à la direction longitudinale X.

De manière connue en soi, chaque essieu 20 comporte au moins deux roues 40 reliées par un arbre 45. Chaque essieu 20 comprend, par exemple, au moins un disque 50, également appelé disque de frein, par exemple deux disques 50, monté(s) sur l'arbre 45. Chaque disque 50 est solidaire de l'arbre 45 correspondant.

Le véhicule 10 comporte, par exemple, deux freins 25, un par disque 50.

Chaque frein 25 est configuré pour commuter entre une configuration de freinage et une configuration de déplacement.

Lorsque le frein 25 est dans la configuration de freinage, le frein 25 exerce sur l'essieu 20 une force tendant à s'opposer à un déplacement du véhicule 10.

Lorsque le frein 25 est dans la configuration de déplacement, le frein 25 est distant de l'essieu 20. En particulier, lorsque le frein 25 est dans la configuration de déplacement, le frein 25 n'exerce aucune force sur l'essieu 20. En d'autres termes, lorsque le frein 25 est dans la configuration de déplacement, l'essieu 20 est libre de pivoter sur lui-même. Le frein 25 ne s'oppose donc pas à un déplacement du véhicule 10.

Chaque frein 25, lorsqu'il est dans la configuration de freinage, est par exemple configuré pour appliquer sur le disque 50 correspondant une force tendant à empêcher le disque 40 de pivoter sur lui-même. En particulier, chaque frein 25 comporte au moins une plaquette 55 configurée pour frotter contre le disque 50 de manière à empêcher ou ralentir une rotation du disque 50.

Lorsque le frein 25 est dans la configuration de déplacement, chaque plaquette 55 est distante du disque 50 correspondant.

Le système de commande 30 est configuré pour commander une commutation de chaque frein 25 depuis sa configuration de déplacement vers sa configuration de freinage, et vice-versa.

Par exemple, le système de commande 30 comporte un circuit pneumatique 60 et un organe de commande 65.

Le circuit pneumatique 60 est configuré pour fournir à chaque frein 25 une pression propre à actionner le frein 25 de manière à entraîner un freinage du véhicule 10 par le frein 25.

Par exemple, le circuit pneumatique 60 est, de manière connue en soi, configuré pour commuter entre une première valeur de pression et une deuxième valeur de pression, chaque frein 25 étant configuré pour commuter dans la position de freinage lorsque la pression présente la première valeur et pour commuter dans la position de déplacement lorsque la pression présente la deuxième valeur.

Par exemple, la première valeur de pression est strictement inférieure à la deuxième valeur de pression. En variante, la deuxième valeur de pression est strictement inférieure à la première valeur de pression.

Il est à noter que des variantes dans lesquelles les freins 25 sont actionnés électriquement ou hydrauliquement sont également envisageables.

L'organe de commande 65 est configuré pour commander une commutation de chaque frein 25 par le circuit pneumatique 60.

L'organe de commande 65 est, par exemple, configuré pour générer un flux d'air sous pression et pour transmettre le flux d'air, via le circuit pneumatique 60, à chaque frein 25.

Chaque sous-ensemble de véhicules 10 est, par exemple, constitué par le ou les véhicule(s) 10 de la pluralité de véhicules 10 dont le ou les indicateur(s) de freinage 35 est (sont) disposé(s) de manière identique dans le véhicule 10.

Chaque indicateur de freinage 35 est configuré pour indiquer à un opérateur un état d'un frein 25 correspondant. En particulier, chaque indicateur de freinage 35 est configuré pour fournir à un opérateur une information dépendant de la configuration, parmi la configuration de freinage et la configuration de déplacement, du frein 25 correspondant.

Par exemple, chaque indicateur de freinage 35 est configuré pour générer un premier signal à destination d'un opérateur lorsque le frein 25 correspondant est dans sa position de déplacement et pour générer un deuxième signal lorsque le frein 25 correspondant est dans sa position de freinage.

Chaque premier ou deuxième signal est un signal visuel prévu pour être observé depuis l'extérieur du véhicule 10.

Par exemple, chaque indicateur de freinage 35 comporte, de manière connue en soi, un boîtier 70 et un organe de signalisation 75.

L'indicateur de freinage 35 est configuré pour déplacer l'organe de signalisation 75 entre au moins une première position et une deuxième position. En particulier, l'indicateur de freinage 35 est configuré pour déplacer l'organe de signalisation 75 vers sa première position lorsque le frein 25 correspondant est dans sa configuration de déplacement et pour déplacer l'organe de signalisation 75 vers sa deuxième position lorsque le frein 25 correspondant est dans sa configuration de freinage.

Par exemple, de manière connue en soi, l'indicateur de freinage 35 est connecté au circuit pneumatique 60 et est configuré pour déplacer l'organe de signalisation 75 vers sa première position lorsque la pression présente la première valeur, et vers sa deuxième position lorsque la pression présente la deuxième valeur.

Il est à noter que des modes de réalisation dans lesquels l'organe de signalisation 75 est susceptible de présenter plus de deux positions sont également envisageables. Dans ce cas, l'indicateur de freinage 35 est notamment configuré pour générer plus de deux signaux distincts, notamment un signal pour chacune des positions de l'organe de signalisation 75.

Le boîtier 70 comporte au moins une fenêtre 80. La fenêtre 80 est configurée pour être observée depuis l'extérieur du véhicule 10. Par exemple, la fenêtre 80 est ménagée dans une face externe du boîtier 70, la face externe étant orientée vers l'extérieur du véhicule 10

L'organe de signalisation 75 est visible de l'extérieur du boîtier 70 lorsque l'organe de signalisation 75 est dans au moins une de sa première position et de sa deuxième position.

Par exemple, l'organe de signalisation 75 est configuré pour être déplacé en translation selon une direction perpendiculaire à la face du boîtier 70 dans laquelle la fenêtre 80 est ménagée. Dans ce cas, l'organe de signalisation 75 comporte, par exemple, deux portions indicatrices 85 et 90, la première portion indicatrice 85 étant visible à travers la fenêtre 80 lorsque l'organe de signalisation 75 est dans la première position, la deuxième portion indicatrice 90 étant visible à travers la fenêtre 80 lorsque l'organe de signalisation 75 est dans la deuxième position.

Chaque portion indicatrice 85, 90 présente, par exemple, une teinte différente de l'autre portion indicatrice 85, 90 afin de permettre à un opérateur d'observer, à travers la fenêtre 80, si l'organe de signalisation 75 est dans la première position ou dans la deuxième position.

En variante, une portion de l'organe de signalisation 75 fait saillie hors du boîtier 70 lorsque l'organe de signalisation 75 est dans une unique position parmi la première ou la deuxième position.

Selon encore une variante envisageable, l'organe de signalisation 75 est fixe par rapport au boîtier 70 et comporte un émetteur lumineux configuré pour générer le premier signal et le deuxième signal, chacun de ces signaux étant alors, par exemple, un signal lumineux d'une couleur spécifique et/ou présentant forme particulière. Selon une autre variante, l'un des signaux est constitué par une lumière émise par l'émetteur et l'autre signal est constitué par l'absence de lumière émise.

L'installation 15 comporte un emplacement 95 de réception d'un véhicule 10 à surveiller, parmi la pluralité de véhicules 10, au moins un imageur 100, un support 105 pour chaque imageur 100 et un dispositif électronique 110 d'analyse.

L'emplacement 95 est configuré pour accueillir un véhicule 10 parmi la pluralité de véhicules 10, le véhicule 10 considéré étant dans une position de réception à l'intérieur de l'emplacement 95.

L'emplacement 95 comporte, par exemple, une portion de voie ferrée 112 destinée à accueillir le véhicule 10 si ce véhicule 10 est un véhicule ferroviaire, ou encore une portion de chaussée carrossable si le véhicule 10 est un véhicule non ferroviaire.

Chaque imageur 100 est configuré pour acquérir des images du véhicule 10 lorsque le véhicule 10 est dans la position de réception.

En particulier, chaque imageur 100 est configuré pour acquérir des images d'un indicateur de freinage 35 correspondant lorsque le véhicule 10 est dans la position de réception. Chaque image est apte à permettre à un opérateur d'identifier le premier signal ou le deuxième signal sur l'image. En d'autres termes, chaque image est prévue pour que, si l'indicateur de freinage 35 correspondant génère un signal parmi le premier ou le deuxième signal lorsque l'image est acquise, le signal généré est identifiable par un opérateur sur l'image.

L'installation 15 comporte, notamment une pluralité d'imageurs 100 et de supports 105 correspondants, par exemple, un imageur 100 et un support 105 correspondant pour chaque indicateur de freinage 35 du véhicule 10.

Chaque imageur 100 est susceptible d'être choisi parmi un grand nombre d'imageurs connus.

Chaque imageur 100 est, en outre, configuré pour transmettre chaque image acquise au dispositif d'analyse 110. Par exemple, chaque imageur 100 est configuré pour transmettre chaque image acquise par communication radiofréquence.

La communication radiofréquence désigne la transmission de messages via un signal comportant au moins une onde électromagnétique radiofréquence.

Les ondes électromagnétiques radiofréquences sont les ondes électromagnétiques présentant une fréquence comprise entre 3 KiloHertz (KHz) et 3 GigaHertz (GHz).

Chaque support 105 est configuré pour supporter un imageur 100 correspondant. Le support 105 est, en outre, configuré pour déplacer l'imageur 100 entre une troisième position et une quatrième position. Il est à noter que, en variante, le support 105 est tel que l'imageur 100 est fixe.

Lorsque l'imageur 100 est dans la troisième position, l'imageur 100 est apte à acquérir une image d'un indicateur de freinage 35 d'un premier véhicule 10, parmi la pluralité de véhicules 10, lorsque ce premier véhicule 10 est dans la position de réception.

Par exemple, lorsque l'imageur 100 est dans la troisième position, l'imageur 100 est en regard de l'indicateur de freinage 35 correspondant du premier véhicule 10. En particulier, un axe optique de l'imageur 100 intersecte l'indicateur de freinage 35 correspondant.

Lorsque l'imageur 100 est dans la quatrième position, l'imageur 100 est apte à acquérir une image d'un indicateur de freinage 35 d'un deuxième véhicule 10 différent du premier véhicule 10, parmi la pluralité de véhicules 10, lorsque ce deuxième véhicule 10 est dans la position de réception.

Par exemple, lorsque l'imageur 100 est dans la quatrième position, l'imageur 100 est en regard de l'indicateur de freinage 35 correspondant du deuxième véhicule 10. En particulier, un axe optique de l'imageur 100 intersecte l'indicateur de freinage 35 correspondant.

Le deuxième véhicule 10 est, notamment, un véhicule 10 d'un type de véhicules 10 différent du premier véhicule 10. En particulier, un décalage spatial entre l'indicateur de freinage 35 du premier véhicule 10, associé à un imageur 100, et l'indicateur de freinage 35, associé au même imageur 100, du deuxième véhicule 10, lorsque chacun de ces véhicules 10 est dans la position de réception correspondante, est strictement supérieur à zéro. Par exemple, le décalage spatial est supérieur ou égal à 50 centimètres, par exemple compris entre 1 mètre et 2 mètres.

Par exemple, une hauteur d'un indicateur de freinage 35 associé à un frein 25 du premier véhicule 10 est différente d'une hauteur d'un indicateur de freinage 35 associé au même frein 25 du deuxième véhicule 10. Il est entendu par « même frein 25 » un frein 25 jouant un rôle similaire dans les deux véhicules, par exemple le frein gauche de l'essieu 20 le plus à l'avant du véhicule 10, ou encore le frein droit de l'essieu 20 immédiatement à l'arrière de ce premier essieu, et ainsi de suite.

En variance ou en complément, une distance entre un indicateur de freinage 35 du premier véhicule 10 et l'avant du premier véhicule 10, est différente d'une distance entre un indicateur de freinage 35 associé au même frein 25 du deuxième véhicule 10 et l'avant du deuxième véhicule 10.

De manière générale, le positionnement spatial des indicateurs de freinage 35 est susceptible de varier de nombreuses façons entre le premier véhicule et le deuxième véhicule.

Toutefois, au moins un indicateur de freinage 35 est positionné différemment dans le premier véhicule 10 et dans le deuxième véhicule 10, de manière à ce qu'un déplacement d'un imageur 100 correspondant au moins depuis la troisième position jusqu'à la quatrième position correspondant est nécessaire pour qu'une installation 10 dans laquelle l'imageur 100 acquiert une image d'un indicateur de freinage 35 du premier véhicule 10 permette l'acquisition d'une image d'un indicateur de freinage 35 du deuxième véhicule 10.

Le support 105 est, par exemple, configuré pour déplacer l'imageur 100 correspondant, entre ses troisième et quatrième positions, selon la direction longitudinale X. En particulier, le support 105 est configuré pour déplacer l'imageur 100 correspondant, selon la direction longitudinale X, d'une distance comprise entre 0 mètres et 2 mètres entre ses troisième et quatrième positions.

Le support 105 est, en variante ou en complément, configuré pour déplacer l'imageur 100 correspondant, entre ses troisième et quatrième positions, selon la direction verticale Z. En particulier, le support 105 est configuré pour déplacer l'imageur 100 correspondant, selon la direction verticale Z, d'une distance comprise entre 0 mètres et 2 mètres entre ses troisième et quatrième positions.

Le support 105 comporte, par exemple, un élément 115 s'étendant selon la direction verticale Z et un élément 120 s'étendant selon la direction longitudinale X. L'imageur 100 est fixé à un chariot porté par l'élément 120 et configuré pour être déplacé par un moteur du support 105 le long de l'élément 120 selon la direction longitudinale X. L'élément 120 est fixé à un chariot mobile le long de l'élément 115 selon la direction verticale Z.

Le support 105 comporte, par exemple, un module de commande configuré pour commander le déplacement de l'imageur 100 entre ses troisième et quatrième positions par les différents moteurs ou actionneurs du support 105.

Il est à noter que d'autres types de supports 105 permettant de déplacer l'imageur 100 selon une ou deux directions sont susceptibles d'être utilisés.

Le dispositif d'analyse 110 est, par exemple, un dispositif mobile et transportable par un opérateur, notamment un ordinateur portable, une tablette, ou encore un téléphone mobile.

Le dispositif d'analyse 110 est configuré pour recevoir chaque image acquise par chaque imageur 100.

Par exemple, le dispositif d'analyse 110 comporte un module radiofréquence 125 configuré pour échanger des données avec l'imageur 100. En variante, le dispositif d'analyse 110 est relié à chaque imageur 100 par une liaison filaire.

Le dispositif d'analyse 110 comporte, en outre, une interface homme-machine 130, notamment un écran, configurée pour afficher chaque image à destination d'un opérateur.

Optionnellement, le dispositif d'analyse 110 comporte, en outre, un module d'analyse 135 configuré pour détecter une position d'au moins un frein 25 à partir d'au moins une image reçue. En particulier, le module d'analyse 135 est configuré pour détecter une position de chaque frein 25 à partir d'une image de l'indicateur de freinage 35 correspondant.

Le module d'analyse 135 est, notamment, configuré pour reconnaître, sur chaque image d'un indicateur de freinage 35, un signal, notamment un premier ou deuxième signal, généré par l'indicateur de freinage 35, ou encore l'absence d'un premier ou deuxième signal, et pour détecter la position de chaque frein 25 en fonction de ladite reconnaissance. Pour cela, de nombreux algorithmes de reconnaissance d'image sont susceptibles d'être mis en oeuvre par le module d'analyse 35.

Le module d'analyse 135 est, par exemple, configuré pour afficher sur l'écran 130 un message dépendant de la position détectée de chaque frein 25.

Il est entendu par « absence de premier ou deuxième signal » que l'indicateur de freinage 35 ne génère pas un signal correspondant au premier ou au deuxième signal. Par exemple, l'organe de signalisation 75 est dans une position dans laquelle les première et deuxième portions indicatrices 85 et 90 sont visibles partiellement simultanément à travers la fenêtre 80, ou encore seule une partie d'une portion indicatrice 85 ou 90 est visible.

Le module d'analyse 135 déduit de l'absence de premier ou deuxième signal que le frein 25 correspondant n'est ni dans la configuration de déplacement ni dans la configuration de freinage.

En variante ou en complément, le dispositif d'analyse 110 comporte, en outre, un module 140 de commande configuré pour transmettre à chaque imageur 100, via le module radiofréquence 125, des instructions pour déplacer l'imageur 100 entre la troisième et la quatrième position correspondante. En variante, le module de commande 140 est configuré pour transmettre les instructions directement au module de commande du support 105.

Les instructions pour déplacer l'imageur 100 comportent, par exemple, des coordonnées spatiales d'une position désirée de l'imageur 100 dans un repère de l'installation 15, ou encore des valeurs correspondant à des positions de référence de chaque chariot du support 105 correspondant à ladite position désirée.

Le module de commande 140 est, par exemple, configuré pour identifier un véhicule 10, parmi la pluralité de véhicules 10, accueilli dans l'emplacement de réception 95, et pour commander un déplacement de chaque imageur 100 en fonction du véhicule identifié.

Lorsque le véhicule identifié est le premier véhicule 10, le module de commande 140 commande, notamment, un déplacement de chaque imageur 100 vers la troisième position correspondante.

Lorsque le véhicule identifié est le deuxième véhicule 10, le module de commande 140 commande, notamment, un déplacement de chaque imageur 100 vers la quatrième position correspondante.

Le module de commande 140 identifie, par exemple, le véhicule 10 à partir d'un identifiant du sous-ensemble de véhicules 10 auquel le véhicule 10 accueilli dans l'emplacement appartient. Par exemple, l'identifiant est entré par un opérateur via l'interface homme-machine 130, ou encore acquis par reconnaissance d'images, notamment via un code matriciel porté par le véhicule 10 et que le module de commande 140 est configuré pour décoder de manière à en extraire l'identifiant.

Le module de commande 140 comporte, par exemple, une liste des identifiants de chaque véhicule 10, ou de chaque sous-ensemble de véhicules 10, et un ensemble de coordonnées. L'ensemble de coordonnées comporte, pour chaque identifiant, une liste de coordonnés spatiales de chaque imageur 100 propres à définir la troisième ou quatrième position de l'imageur 100. En d'autres termes, la liste de coordonnées forme un ensemble d'instructions propres à identifier, pour chaque imageur 100, une position de l'imageur 100 propre à permettre à l'imageur 100 d'acquérir une image d'un indicateur de freinage 35 d'un véhicule 10 associé à l'identifiant correspondant.

Le dispositif d'analyse 110 comporte, par exemple, un processeur 145 et une mémoire 150 comportant des instructions logicielles qui, lorsqu'elles sont exécutées sur le processeur, forment le module d'analyse 135 et le module de commande 140. En variante, au moins une partie du dispositif d'analyse 110 est réalisée sous la forme de circuits intégrés dédiés, ou encore de composants logiques programmables.

Il est à noter que selon une variante possible, le module de commande 140 fait partie d'un dispositif différent du module d'analyse, par exemple un dispositif de contrôle de l'installation 15, ce dispositif n'étant pas nécessairement mobile.

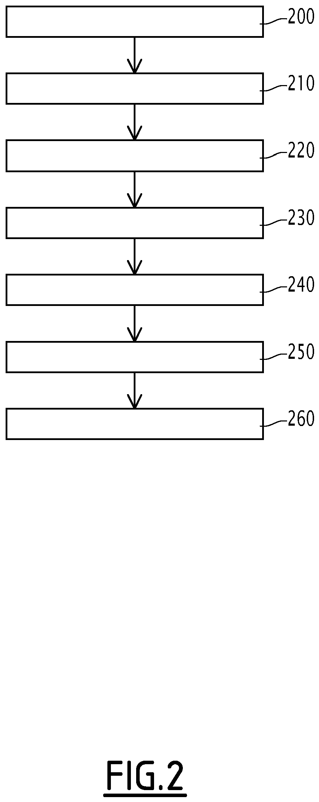

Le fonctionnement de l'installation 15 va maintenant être décrite en référence à la figure 2, qui présente un ordinogramme des étapes d'un procédé de surveillance de la pluralité de véhicules 10.

Le procédé comporte une première étape 200 d'acquisition, une première étape 210 de transmission, une étape 220 de retrait, une étape 230 de mise en place, une étape 240 de déplacement, une deuxième étape 250 d'acquisition et une deuxième étape 260 de transmission.

Lors de la première étape d'acquisition 200, le premier véhicule 10 est accueilli dans l'emplacement de réception 95, dans la position de réception. En outre, au moins un imageur 100, notamment chaque imageur 100, est dans la troisième position correspondante.

Au cours de la première étape d'acquisition 200, au moins une image de l'indicateur 35 correspondant est acquise par au moins un imageur 100, par exemple par chaque imageur 100.

En particulier, un opérateur présent dans une cabine de pilotage du premier véhicule 10 commande une commutation d'au moins un frein 25 vers l'une configuration parmi sa configuration de freinage et sa configuration de déplacement, par exemple vers la configuration de freinage. Par exemple, l'opérateur commande la commutation de chaque frein 25 du premier véhicule 10.

Une image d'au moins un indicateur de freinage 35 dont la commutation a été commandée est acquise par l'imageur 100 correspondant lors de la première étape d'acquisition 200. Par exemple, une image de chaque indicateur de freinage 35 dont la commutation a été commandée est acquise par l'imageur 100 correspondant.

Chaque image comporte une image de l'organe de signalisation 75. Ainsi, chaque image est apte à permettre à un opérateur de déterminer si le premier ou deuxième signal est émis par l'organe de signalisation 75 visible sur l'image.

Au cours de la première étape de transmission 210, chaque image acquise est transmise au dispositif d'analyse 110. Le dispositif d'analyse 110 est, par exemple, embarqué dans le poste de pilotage du premier véhicule 10.

Le dispositif d'analyse 110 affiche, par exemple, chaque image reçue à destination d'un opérateur.

Optionnellement, le module d'analyse 135 détecte une configuration d'au moins un frein 25 à partir d'une ou plusieurs image(s) associée (s). Par exemple, le module d'analyse 135 identifie sur l'image le premier ou deuxième signal et détecte la configuration du frein 25 considéré en fonction du premier ou deuxième signal identifié.

Lors de l'étape de retrait 220, le premier véhicule 10 est retiré de l'emplacement de réception 95.

Au cours de l'étape de mise en place 230, le deuxième véhicule 10 est mis en place, dans sa position de réception, dans l'emplacement 95.

Lors de l'étape de déplacement 240, le support 140 d'au moins un imageur 100 déplace l'imageur depuis sa troisième position jusqu'à sa quatrième position. Par exemple, chaque imageur 100 est déplacé jusqu'à sa quatrième position.

Par exemple, l'opérateur entre un identifiant du deuxième véhicule 10 dans le dispositif d'analyse 110, et le module de commande 140 transmet en réponse à chaque imageur 100 des instructions pour déplacer l'imageur 100 entre la troisième et la quatrième position correspondante.

Au cours de la deuxième étape d'acquisition 250, au moins une image de l'indicateur 35 correspondant du deuxième véhicule 10 est acquise par au moins un imageur 100, par exemple par chaque imageur 100.

En particulier, l'opérateur est présent dans une cabine de pilotage du deuxième véhicule 10 et commande une commutation d'au moins un frein 25 vers l'une configuration parmi sa configuration de freinage et sa configuration de déplacement, par exemple vers la configuration de freinage. Par exemple, l'opérateur commande la commutation de chaque frein 25 du deuxième véhicule 10.

Une image d'au moins un indicateur de freinage 35 dont la commutation a été commandée est acquise par l'imageur 100 correspondant lors de la deuxième étape d'acquisition 250. Par exemple, une image de chaque indicateur de freinage 35 dont la commutation a été commandée est acquise par l'imageur 100 correspondant.

Chaque image comporte une image de l'organe de signalisation 75. Ainsi, chaque image est apte à permettre à un opérateur de déterminer si le premier ou deuxième signal est émis par l'organe de signalisation 75 visible sur l'image.

Au cours de la deuxième étape de transmission 260, chaque image acquise est transmise au dispositif d'analyse 110. Le dispositif d'analyse 110 est, par exemple, embarqué dans le poste de pilotage du deuxième véhicule 10.

Le dispositif d'analyse 110 affiche, par exemple, chaque image reçue à destination d'un opérateur.

Optionnellement, le module d'analyse 135 détecte une configuration d'au moins un frein 25 du deuxième véhicule 10 à partir d'une ou plusieurs image(s) associée(s). Par exemple, le module d'analyse 135 identifie sur l'image le premier ou deuxième signal et détecte la configuration du frein 25 considéré en fonction du premier ou deuxième signal identifié.

Grâce à l'invention, l'installation 15 est susceptible d'être utilisée avec de nombreux types de véhicules 10. En outre, elle permet une surveillance rapide de chaque véhicule 10, notamment parce que peu d'opérateurs sont requis pour effectuer cette surveillance.

En effet, un unique opérateur peut observer chaque image et en déduire un bon ou mauvais fonctionnement de chaque frein 25, mais aussi commander le changement de configuration de chaque frein 25. En particulier, la présence d'un opérateur à l'extérieur du véhicule 10 pour observer les indicateurs de freinage 35 et/ou déplacer les imageurs 100 n'est pas nécessaire. Il n'est donc pas nécessaire de prévoir le temps de déplacement de l'opérateur d'un indicateur de freinage 35 (ou d'un imageur 100) à un autre.

Le déplacement de l'imageur 100 par le support 105 selon la direction longitudinale X permet notamment une bonne adaptation à de nombreux types de véhicules 10, notamment de trains. Pour cela, une distance entre les troisième et quatrième positions, selon la direction longitudinale X, comprise entre zéro et deux mètres permet notamment une bonne surveillance de nombreux modèles de véhicules 10.

Le déplacement de l'imageur 100 par le support 105 selon la direction verticale Z permet notamment une bonne adaptation à de nombreux types de véhicules 10, notamment de trains. Pour cela, une distance entre les troisième et quatrième positions, selon la direction verticale Z, comprise entre zéro et deux mètres permet notamment une bonne surveillance de nombreux modèles de véhicules 10.

Lorsque l'installation comporte un module configuré pour identifier le véhicule accueilli dans l'emplacement de réception 95 et pour commander un déplacement de l'imageur 100 en réponse, le fonctionnement de l'installation 15 est particulièrement rapide puisqu'il suffit à l'opérateur d'identifier le véhicule 10 pour que le ou les imageurs soi(ent) chacun déplacé(s) à la position correspondante, sans requérir un autre opérateur.

La communication radiofréquence est particulièrement adapté au transfert des images et des instructions entre l'imageur 100 (et/ou le support 105) et le dispositif d'analyse 110, puisque notamment le dispositif d'analyse 110 est aisément utilisable depuis la cabine de pilotage d'un véhicule 10.

L'affichage des images à destination de l'opérateur permet à celui-ci d'identifier aisément un éventuel dysfonctionnement d'un frein 25, si le premier ou deuxième signal émis par l'indicateur de freinage 35 ne correspond pas aux commandes envoyées au frein 25 correspondant.

Lorsque le module d'analyse 135 identifie la configuration du frein 25 à partir des images, le travail de l'opérateur est facilité. Dans certains cas, l'identification de la configuration du frein 25 permet de détecter un dysfonctionnement du frein 25 sans intervention d'un opérateur. Par exemple, lorsque le module d'analyse 135 identifie la configuration du frein 25 à partir des images, aucune image n'est affichée par le dispositif d'analyse 110.

## Revendications

1. Installation (15) de surveillance d'une pluralité de véhicules (10), la pluralité de véhicules (10) comportant au moins deux types de véhicules (10) distincts, chaque véhicule (10) comportant au moins un frein (25) et un indicateur de freinage (35), le frein (25) étant commutable entre une configuration de freinage dans laquelle le frein (25) s'oppose à un déplacement du véhicule (10) et une configuration de déplacement dans laquelle le frein (25) ne s'oppose pas au déplacement du véhicule, l'indicateur (35) comportant un organe de signalisation (75) configuré pour générer au moins un premier signal et un deuxième signal, chaque premier ou deuxième signal étant un signal visuel observable depuis l'extérieur du véhicule (10), l'indicateur (35) étant configuré pour que l'organe de signalisation (75) génère le premier signal lorsque le frein (25) est dans la configuration de déplacement et génère le deuxième signal lorsque le frein (25) est dans la configuration de freinage,
l'installation (15) comportant un emplacement (95) de réception d'un véhicule (10) parmi la pluralité de véhicules (10) dans une position de réception, au moins un imageur (100), un support (105) de l'imageur (100) et un dispositif électronique (110) d'analyse, l'imageur (100) étant configuré pour acquérir des images et pour transmettre au moins une image acquise au dispositif d'analyse (110),
l'installation (15) étant **caractérisée en ce que** le support (105) est configuré pour déplacer l'imageur (100) entre plusieurs positions prédéterminées, et **en ce que** l'installation comprend un module de commande (140) propre à commander au support (105) le déplacement de l'imageur (100) en fonction du type de véhicule reçu dans l'emplacement de réception (95).

2. Installation selon la revendication 1, dans laquelle le support (105) est configuré pour déplacer l'imageur (100) entre une troisième position et une quatrième position, l'imageur (100) étant configuré pour, lorsqu'un premier véhicule (10) est dans la position de réception, acquérir une image de l'indicateur (35) du premier véhicule (10) lorsque l'imageur (100) est dans la troisième position et étant configuré pour, lorsqu'un deuxième véhicule (10), différent du premier véhicule (10), est dans la position de réception, acquérir une image de l'indicateur (35) du deuxième véhicule (10) lorsque l'imageur (100) est dans la quatrième position.

3. Installation selon la revendication 2, dans laquelle chaque véhicule (10) s'étend, lorsque le véhicule (10) est dans la position de réception, selon une direction longitudinale (X), le support (105) étant configuré pour déplacer l'imageur (100) selon la direction longitudinale (X) entre les troisième et quatrième positions.

4. Installation selon la revendication 3, dans laquelle une distance, selon la direction longitudinale (X), entre les troisième et quatrième positions est inférieure ou égale à 2 mètres.

5. Installation selon l'une quelconque des revendications 2 à 4, dans laquelle le support (105) est configuré pour déplacer l'imageur (100) selon une direction verticale (Z) entre les troisième et quatrième positions.

6. Installation selon la revendication 5, dans laquelle une distance, selon la direction verticale (Z), entre les troisième et quatrième positions est inférieure ou égale à 2 mètres.

7. Installation selon l'une quelconque des revendications précédentes, comportant un dispositif électronique (110) configuré pour identifier un type de véhicule (10) accueilli dans l'emplacement de réception (95) et dans laquelle le module de commande (140) est configuré pour commander le déplacement de l'imageur (100), par le support (105), entre les différentes positions prédéterminées en fonction du type de véhicule identifié.

8. Installation selon l'une quelconque des revendications précédentes, dans laquelle le dispositif d'analyse (110) est configuré pour afficher chaque image acquise à destination d'un opérateur.

9. Installation selon l'une quelconque des revendications précédentes, dans laquelle le dispositif d'analyse (110) est configuré pour détecter une configuration du frein (25) à partir d'au moins une image reçue.

10. Procédé de surveillance d'une pluralité de véhicules (10), la pluralité de véhicules (10) comportant au moins deux types de véhicules (10) distincts, chaque véhicule (10) comportant au moins un frein (25) et un indicateur (35) de freinage, le frein (25) étant commutable entre une configuration de freinage dans laquelle le frein (25) s'oppose à un déplacement du véhicule (10) et une configuration de déplacement dans laquelle le frein (25) ne s'oppose pas à un déplacement du véhicule (10), l'indicateur (35) comportant un organe de signalisation (75) configuré pour générer un premier signal et un deuxième signal, chaque premier ou deuxième signal étant un signal visuel observable depuis l'extérieur du véhicule (10), l'indicateur (35) étant configuré pour que l'organe de signalisation (75) génère le premier signal lorsque le frein (25) est dans la configuration de déplacement et génère le deuxième signal lorsque le frein (25) est dans la configuration de freinage,
le procédé étant mis en oeuvre par une installation (15) comportant un emplacement (95) de réception d'un véhicule (10) dans une position de réception, au moins un imageur (100), un support (105) de l'imageur (100) et un dispositif électronique (110) d'analyse, l'imageur (100) étant configuré pour acquérir des images et pour transmettre au moins une image acquise au dispositif d'analyse (110),
**caractérisé en ce que** le procédé comporte une étape de commande, par un module de commande (140), d'un déplacement (240) par le support (105) de l'imageur (100) entre deux positions prédéterminées en fonction du type du véhicule (10) reçu dans l'emplacement de réception (95).

## Patentansprüche

1. Anlage (15) zur Überwachung einer Vielzahl von Fahrzeugen (10), wobei die Vielzahl von Fahrzeugen (10) mindestens zwei verschiedene Typen von Fahrzeugen (10) umfasst, wobei jedes Fahrzeug (10) mindestens eine Bremse (25) und eine Bremsanzeige (35) umfasst, wobei die Bremse (25) zwischen einer Bremskonfiguration, in der die Bremse (25) einer Bewegung des Fahrzeugs (10) entgegenwirkt, und einer Fahrkonfiguration, in der die Bremse (25) der Bewegung des Fahrzeugs nicht entgegenwirkt, umschaltbar ist, wobei die Anzeige (35) ein Signalisierungsorgan (75) umfasst, das dazu ausgelegt ist, mindestens ein erstes Signal und ein zweites Signal zu erzeugen, wobei jedes erste oder zweite Signal ein visuelles Signal ist, das von außerhalb des Fahrzeugs (10) beobachtbar ist, wobei die Anzeige (35) dazu ausgelegt ist, dass das Signalisierungsorgan (75) das erste Signal erzeugt, wenn sich die Bremse (25) in der Fahrkonfiguration befindet, und das zweite Signal erzeugt, wenn sich die Bremse (25) in der Bremskonfiguration befindet,
wobei die Anlage (15) eine Empfangsstelle (95) für ein Fahrzeug (10) von der Vielzahl von Fahrzeugen (10) in einer Empfangsposition, mindestens einen Bildgeber (100), eine Halterung (105) des Bildgebers (100) und eine elektronische Analysevorrichtung (110) umfasst, wobei der Bildgeber (100) zum Erfassen der Bilder und zum Übertragen von mindestens einem erfassten Bild an die Analysevorrichtung (110) ausgelegt ist,
wobei die Anlage (15) **dadurch gekennzeichnet ist, dass** die Halterung (105) dazu ausgelegt ist, den Bildgeber (100) zwischen mehreren vorbestimmten Positionen zu bewegen, und dass die Anlage ein Steuermodul (140) umfasst, das imstande ist, der Halterung (105) die Bewegung des Bildgebers (100) in Abhängigkeit vom Typ des in der Empfangsstelle (95) empfangenen Fahrzeugs zu befehlen.

2. Anlage nach Anspruch 1, wobei die Halterung (105) derart ausgelegt ist, den Bildgeber (100) zwischen einer dritten Position und einer vierten Position zu bewegen, wobei der Bildgeber (100) derart ausgelegt ist, wenn sich ein erstes Fahrzeug (10) in der Empfangsposition befindet, ein Bild der Anzeige (35) vom ersten Fahrzeug (10) zu erfassen, wenn der Bildgeber (100) in der dritten Position ist, und dazu ausgelegt ist, wenn ein zweites Fahrzeug (10), das sich von dem ersten Fahrzeug (10) unterscheidet, in der Empfangsposition ist, ein Bild der Anzeige (35) vom zweiten Fahrzeug (10) zu erfassen, wenn der Bildgeber (100) in der vierten Position ist.

3. Anlage nach Anspruch 2, wobei sich jedes Fahrzeug (10), wenn sich das Fahrzeug (10) in der Empfangsposition befindet, in einer Längsrichtung (X) erstreckt, wobei die Halterung (105) derart ausgelegt ist, den Bildgeber (100) in der Längsrichtung (X) zwischen der dritten und der vierten Position zu bewegen.

4. Anlage nach Anspruch 3, wobei ein Abstand in der Längsrichtung (X) zwischen der dritten und der vierten Position kleiner oder gleich 2 Meter ist.

5. Anlage nach einem der Ansprüche 2 bis 4, wobei die Halterung (105) derart ausgelegt ist, den Bildgeber (100) in einer vertikalen Richtung (Z) zwischen der dritten und der vierten Position zu bewegen.

6. Anlage nach Anspruch 5, wobei ein Abstand in der vertikalen Richtung (Z) zwischen der dritten und der vierten Position kleiner oder gleich 2 Meter ist.

7. Anlage nach einem der vorhergehenden Ansprüche, die eine elektronische Vorrichtung (110) aufweist, die derart ausgelegt ist, einen Fahrzeugtyp (10) zu identifizieren, der in der Empfangsstelle (95) aufgenommen ist, und wobei das Steuermodul (140) derart ausgelegt ist, die Bewegung des Bildgebers (100) anhand der Halterung (105) zwischen den verschiedenen vorbestimmten Positionen in Abhängigkeit vom identifizierten Fahrzeugtyp zu steuern.

8. Anlage nach einem der vorhergehenden Ansprüche, wobei die Analysevorrichtung (110) dazu ausgelegt ist, einem Bediener jedes erfasste Bild anzuzeigen.

9. Anlage nach einem der vorhergehenden Ansprüche, wobei die Analysevorrichtung (110) derart ausgelegt ist, eine Konfiguration der Bremse (25) ausgehend von mindestens einem empfangenen Bild zu erkennen.

10. Verfahren zur Überwachung einer Vielzahl von Fahrzeugen (10), wobei die Vielzahl von Fahrzeugen (10) mindestens zwei verschiedene Typen von Fahrzeugen (10) umfasst, wobei jedes Fahrzeug (10) mindestens eine Bremse (25) und eine Bremsanzeige (35) umfasst, wobei die Bremse (25) zwischen einer Bremskonfiguration, in der die Bremse (25) einer Bewegung des Fahrzeugs (10) entgegenwirkt, und einer Fahrkonfiguration, in der die Bremse (25) einer Bewegung des Fahrzeugs (10) nicht entgegenwirkt, umschaltbar ist, wobei die Anzeige (35) ein Signalisierungsorgan (75) umfasst, das dazu ausgelegt ist, ein erstes Signal und ein zweites Signal zu erzeugen, wobei jedes erste oder zweite Signal ein visuelles Signal ist, das von außerhalb des Fahrzeugs (10) beobachtbar ist, wobei die Anzeige (35) dazu ausgelegt ist, dass das Signalisierungsorgan (75) das erste Signal erzeugt, wenn sich die Bremse (25) in der Fahrkonfiguration befindet, und das zweite Signal erzeugt, wenn sich die Bremse (25) in der Bremskonfiguration befindet,
wobei das Verfahren von einer Anlage (15) durchgeführt wird, die eine Empfangsstelle (95) eines Fahrzeugs (10) in einer Empfangsposition, mindestens einen Bildgeber (100), eine Halterung (105) des Bildgebers (100) und eine elektronische Analysevorrichtung (110) umfasst, wobei der Bildgeber (100) zum Erfassen der Bilder und zum Übertragen von mindestens einem erfassten Bild an die Analysevorrichtung (110) ausgelegt ist,
**dadurch gekennzeichnet, dass** das Verfahren einen Schritt des Steuerns einer Bewegung (240) durch die Halterung (105) des Bildgebers (100) zwischen zwei vorbestimmten Positionen in Abhängigkeit vom Typ des Fahrzeugs (10), das in der Empfangsstelle (95) aufgenommen ist, durch ein Steuermodul (140) aufweist.

## Claims

1. An installation (15) for monitoring a plurality of vehicles (10), the plurality of vehicles (10) comprising at least two distinct types of vehicle (10), each vehicle (10) comprising at least one brake (25) and a braking indicator (35), the brake (25) being switchable between a braking configuration in which the brake (25) opposes movement of the vehicle (10) and a travel configuration in which the brake (25) does not oppose movement of the vehicle, the indicator (35) comprising a signalling member (75) configured to generate at least a first signal and a second signal, each first or second signal being a visual signal observable from outside the vehicle (10), the indicator (35) being configured so that the signalling member (75) generates the first signal when the brake (25) is in the travel configuration and generates the second signal when the brake (25) is in the braking configuration,
the installation (15) comprising a location (95) for receiving a vehicle (10) from among the plurality of vehicles (10) in a receiving position, at least one imager (100), a support (105) for the imager (100) and an electronic analysis device (110), the imager (100) being configured to acquire images and to transmit at least one acquired image to the analysis device (110),
the installation (15) being **characterised in that** the support (105) is configured to move the imager (100) between a plurality of predetermined positions, and **in that** the installation comprises a control module (140) suitable for controlling the support (105) to move the imager (100) as a function of the type of vehicle received in the receiving location (95).

2. The installation according to claim 1, wherein the support (105) is configured to move the imager (100) between a third position and a fourth position, the imager (100) being configured to, when a first vehicle (10) is in the receiving position, acquire an image of the indicator (35) of the first vehicle (10) when the imager (100) is in the third position and being configured so that, when a second vehicle (10), different from the first vehicle (10), is in the receiving position, to acquire an image of the indicator (35) of the second vehicle (10) when the imager (100) is in the fourth position.

3. The installation according to claim 2, wherein each vehicle (10) extends, when the vehicle (10) is in the receiving position, in a longitudinal direction (X), the support (105) being configured to move the imager (100) in the longitudinal direction (X) between the third and fourth positions.

4. The installation according to claim 3, wherein a distance, in the longitudinal direction (X), between the third and fourth positions is less than or equal to 2 metres.

5. The installation according to any one of claims 2 to 4, wherein the support (105) is configured to move the imager (100) in a vertical direction (Z) between the third and fourth positions.

6. The installation according to claim 5, wherein a distance, in the vertical direction (Z), between the third and fourth positions is less than or equal to 2 metres.

7. The installation according to any one of the preceding claims, comprising an electronic device (110) configured to identify a type of vehicle (10) accommodated in the receiving location (95) and wherein the control module (140) is configured to control the movement of the imager (100), by the support (105), between the various predetermined positions as a function of the type of vehicle identified.

8. The installation according to any one of the preceding claims, wherein the analysis device (110) is configured to display each image acquired to an operator.

9. The installation according to any one of the preceding claims, wherein the analysis device (110) is configured to detect a configuration of the brake (25) from at least one image received.

10. A method for monitoring a plurality of vehicles (10), the plurality of vehicles (10) comprising at least two distinct types of vehicle (10), each vehicle (10) comprising at least one brake (25) and a braking indicator (35), the brake (25) being switchable between a braking configuration in which the brake (25) opposes movement of the vehicle (10) and a travel configuration in which the brake (25) does not oppose a movement of the vehicle (10), the indicator (35) comprising a signalling member (75) configured to generate a first signal and a second signal, each first or second signal being a visual signal observable from outside the vehicle (10), the indicator (35) being configured so that the signalling member (75) generates the first signal when the brake (25) is in the travel configuration and generates the second signal when the brake (25) is in the braking configuration,
the method being implemented by an installation (15) comprising a location (95) for receiving a vehicle (10) in a receiving position, at least one imager (100), a support (105) for the imager (100) and an electronic analysis device (110), the imager (100) being configured to acquire images and to transmit at least one acquired image to the analysis device (110),
**characterised in that** the method comprises a step of controlling, by a control module (140), a movement (240) by the support (105) of the imager (100) between two predetermined positions as a function of the type of vehicle (10) received in the receiving location (95).
